# EUROPÄISCHE PATENTSCHRIFT

(11) **EP 0 647 102 B1**
(45) Veröffentlichungstag und Bekanntmachung des Hinweises auf die Patenterteilung: **27.03.1996**
(21) Anmeldenummer: 93915781.4
(22) Anmeldetag: 02.07.1993
(51) Int. Cl.: A23N 17/00, A23K 1/14

(54) **Verfahren zum Verarbeiten von Rübenschnitzeln**
Process for processing beetroot shavings
Procédé de transformation de rognures de betteraves

(30) Priorität: 03.07.1992 DE 9208904 U
(43) Veröffentlichungstag der Anmeldung: 12.04.1995
(73) Patentinhaber: Amandus Kahl Nachf. (GmbH & Co.), D-21465 Reinbek (DE)
(72) Erfinder: BEHRMANN, Joachim, D-21465 Reinbek (DE)
(74) Vertreter: Glawe, Delfs, Moll & Partner
(86) Internationale Anmeldenummer: EP9301716
(87) Internationale Veröffentlichungsnummer: WO9401007

(56) Entgegenhaltungen:
- EP-A- 0 331 207
- EP-B- 0 212 391
- GB-A- 2 218 613
- DATABASE WPIL Week 8113, Derwent Publications Ltd., London, GB; AN 81-22969
- DATABASE WPIL Week 8604, Derwent Publications Ltd., London, GB; AN 86-023335

## Beschreibung

Die Erfindung betrifft ein Verfahren zum Verarbeiten eines Ausgangsmaterials zu Futtermittel, bei dem das Ausgangsmaterial in einem Gehäuse von einem darin angeordneten Förderelement gegen das Austragsende des Gehäuses komprimiert wird, so daß sich dort bei gleichzeitiger Temperaturerhöhung ein auf das Material wirkender erhöhter Druck einstellt, und dort aus dem Gehäuse durch eine Austragsöffnung herausgedrückt wird, die durch ein Gegendruckelement in ihrem Durchlaßquerschnitt veränderbar und verschließbar ist.

Es ist ein solches Verfahren bekannt (EP-A-0 331 207), das der thermischen Konditionierung von Futtermitteln vor dem Pelletieren dient. Dabei soll bei der Konditionierung Stärke aufgeschlossen werden, Proteine angelöst werden, Keime abgetötet werden und Rohfasern erweicht werden. Ein ähnliches Verfahren kann auch der Konditionierung von Ölsaaten vor der Ölextraktion dienen (EP-B-0 212 391).

Die Aufgabe der Erfindung besteht darin, das eingangs genannte Verfahren auf Ausgangsmaterialien zur Herstellung von Futtermitteln anzuwenden, die bisher nicht oder nur mit großen Nachteilen zu Futtermitteln verarbeitet werden konnten.

Die erfindungsgemäße Lösung besteht darin, daß als Ausgangsmaterial für das eingangs genannte Verfahren aus getrockneten oder mechanisch entwässerten Rübenschnitzeln bestehendes oder getrocknete oder mechanisch entwässerte Rübenschnitzel enthaltendes Material verwendet wird, dem vor der Behandlung im Gehäuse ein flüssiges Nachprodukt aus der Lebens- und/oder Futtermittelindustrie beigegeben wird.

Es ist bekannt, Rübenschnitzel, insbesondere Rübenschnitzel von Zuckerrüben, zu Futtermitteln zu verarbeiten. Dabei können insbesondere extrahierte Rübenschnitzel, denen also der Zucker für die Zuckerherstellung entzogen ist, verarbeitet werden.

Bisher wurden die noch feuchten, extrahierten Rübenschnitzel mit Melasse, d.h. mit dem unkristallisierbaren Zucker, versetzt. Dieses Gemisch wird anschließend getrocknet.

Aus Gründen des Umweltschutzes und der Energieeinsparung möchte man die Melasse zukünftig jedoch nach der Trocknung zusetzen. Anßerdem sind neue energiesparende Trockner, z.B. Dampftrockner und andere Entwässerungsanlagen entwickelt worden, bei denen die Melasse nach dem Feuchtigkeitsentzug zugesetzt werden muß, und zwar in Mengen bis zu 100% zu den Trockenschnitzeln.

Dieses Gemisch ist stark klebend und mußte bisher in einem Langzeitreaktor ca. 20 - 60 Minuten bei erhöhter Temperatur konditioniert werden, um es entweder zu Pellets verpressen oder lose an den Endverbraucher ausliefern zu können. Die Wirkung dieser Langzeitkonditionierung besteht dabei darin, daß die Melasse langsam in die Rübenschnitzel eindringt und dann nicht mehr an der Oberfläche klebt.

Durch die Erfindung ist es nun möglich geworden, das eingangs genannte Verfahren auch auf Materialien anzuwenden, die getrocknete oder mechanisch entwässerte Rübenschnitzel enthalten oder aus denselben bestehen. Das eingangs genannte Verfahren kann also nicht nur dafür verwendet werden, Stärke aufzuschließen, Proteine anzulösen, Keime abzutöten und Rohfasern zu erweichen, sondern kann auch für eine ganz andere Aufgabestellung herangezogen werden, nämlich das Einbringen großer Mengen von Nachprodukten aus der Lebens- und/oder Futtermittelindustrie in die Rübenschnitzel, wobei ein nichtklebendes Produkt erhalten wird. Die Erfahrungen mit dem vorbekannten Verfahren konnten wegen der ganz anderen Problematik und auch der ganz anderen Konsistenz der Ausgangsmaterialien nicht erwarten lassen, daß die Behandlung der Rübenschnitzel nach dem vorbekannten Verfahren möglich ist. So ist im Stand der Technik (EP-A-0 331 207, Seite 1, Zeile 4) bezeichnenderweise von staub-, pulverförmigen und ähnlichen Substanzen die Rede, während Rübenschnitzel eine gröbere und faserige Konsistenz haben.

Erstaunlicherweise ist es also möglich, die Rübenschnitzel auf einfache Weise mit dem sogenannten "Expander" (EP-B-0 212 391, EP-A-0 331 207) durchzuführen. Die Austragsöffnung kann insbesondere ein Ringspalt sein, was der Fall des sogenannten "Ringspalt-Expanders" ist. Es sind aber auch zum Beispiel ein Flachspalt, ein Lochspalt oder eine Lochscheibe möglich.

Das Förderelement kann insbesondere eine Förderschnecke sein, die aufgrund der Reibung die erforderliche Temperaturerhöhung bewirkt.

In vielen Fällen wird diese Erwärmung aber nicht ausreichen. Man wird vielmehr das Gehäuse beheizen und/oder das Material mit Wasserdampf beaufschlagen. Da durch das Komprimieren des Materials gegen die Austragsöffnung im Inneren des Gehäuses ein erhöhter Druck besteht, kann durch Zuführen von entsprechend heißem wasserdampf eine Temperatur von über 100°C im Gehäuse erreicht werden.

Verläßt das Material das Gehäuse dann durch die Austragsöffnung, so findet eine schlagartige Entspannung des überhitzten Wassers statt, wodurch die Materialteilchen expandiert werden.

Insbesondere wenn anschließend der austretende Materialstrang in Abschnitte aufgeteilt wird, hat das Material häufig schon eine Form, die es als Futtermittel geeignet macht.

In vielen anderen Fällen wird man das so gewonnene Zwischenprodukt aber erst noch einer Pelletpresse zuführen, in der das Material durch Kollerrollen durch eine mit Bohrungen versehene Flachmatrize oder Ringmatrize gepreßt wird, um so Pellets zu erhalten.

Durch die Druckkonditionierung mit dem Expander wird die Verdaulichkeit der in den Trockenschnitzeln enthaltenen Nährstoffe verbessert. Um den Nährwert des Produktes weiter zu erhöhen, können vor dem Expander Laugen, Säuren, flüchtige Basen, z.B. NaOH, NH₄, Harnstoff zum Zelluloseaufschluß zugesetzt werden.

Als Nachprodukte der Lebensmittel- und Futtermittelindustrie können außer der bereits erwähnten Melasse Vinasse, d.h. entzuckerte Melasse, die z.B. bei der Alkoholherstellung entsteht, Schlempe aus der Kartoffelverarbeitung, tierische oder pflanzliche Fette verwendet werden, was zur Erhöhung des Nährstoffinhaltes und optimalen Verwertung von Nebenprodukten dient.

Eine Kombination von verschiedenen flüssigen Produkten ist möglich.

Vorteilhafterweise wird das flüssige Nachprodukt in einer Menge beigegeben, die bis zu 100 Gew.-% der Trockenschnitzel entspricht. Besonders vorteilhaft ist es, wenn das flüssige Nachprodukt in einer Menge beigegeben wird, die ungefähr 40-70 Gew.-% der Trockenschnitzel entspricht.

Werden extrahierte Rübenschnitzel verarbeitet, so ist der Rohstoff selbstverständlich besonders preisgünstig. In vielen Fällen wird es aber auch zweckmäßig sein, unextrahierte Rübenschnitzel zu verarbeiten.

Die Erfindung wird im folgenden anhand von vorteilhaften Vorrichtungen beschrieben, mit denen das erfindungsgemäße Verfahren durchgeführt werden kann. Es zeigen:
- Fig. 1: eine Ausführungsform einer Vorrichtung mit einer Flachmatrizenpresse;
- Fig. 2: eine Ausführungsform mit einer Ringmatrizenpresse; und
- Fig. 3: den prinzipiellen Aufbau einer an sich bekannten Pelletpresse.

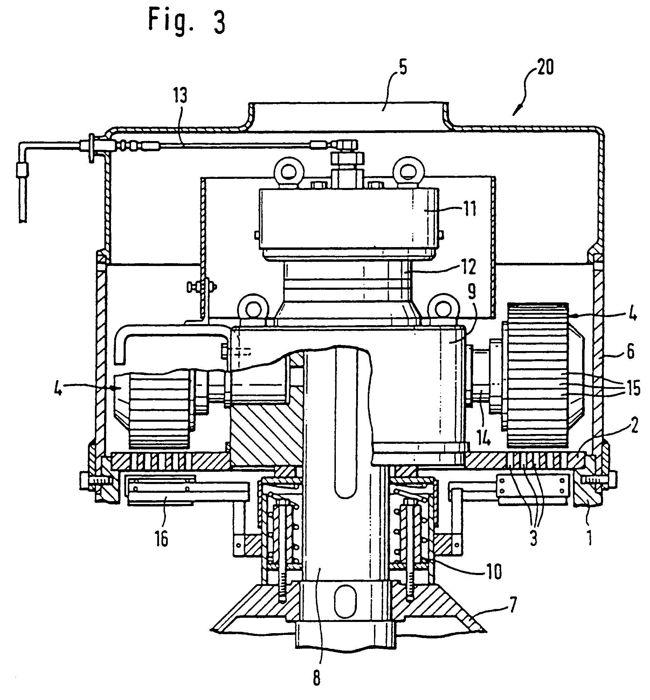

Zum besseren Verständnis der Erfindung soll zunächst unter Bezugnahme auf Fig. 3 der bekannte Aufbau einer Pelletpresse 20 beschrieben werden.

Auf einem Maschinengestell 1 ist eine Flachmatrize 2 befestigt, die mit Bohrungen 3 versehen ist, durch die das durch Kollerrollen 4 zusammengepreßte Material hindurchgedrückt wird. Das Ausgangsmaterial, das z.B. staubförmig sein kann, wird dabei durch die Öffnung 5 im Gehäuse 6 von oben her eingefüllt. Das Gehäuse 6 ist ebenfalls am Maschinengestell 1 befestigt.

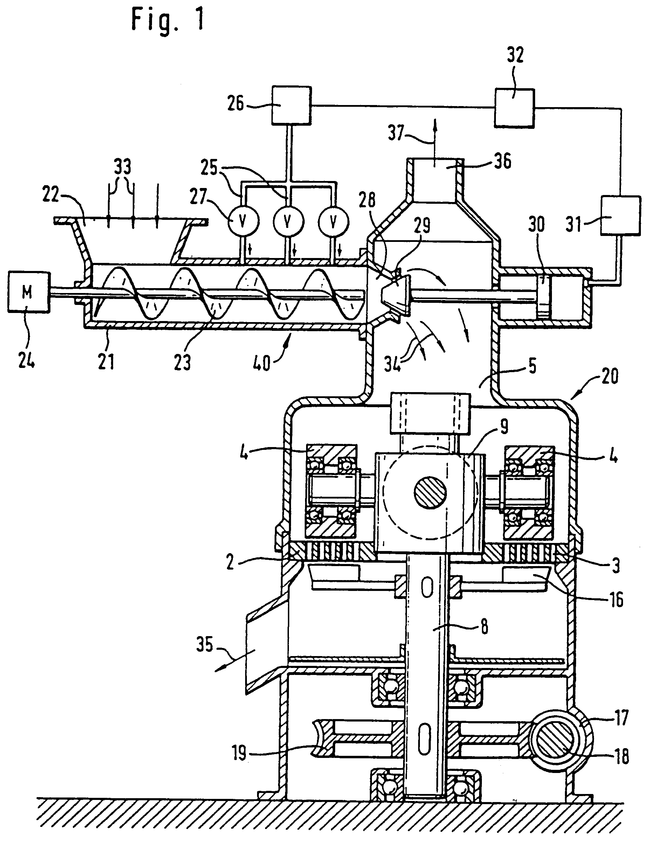

Auf in der Fig. nicht gezeigte Weise ist am Maschinengestell 1 ein Drehteller 7 drehbar befestigt, der mit einem entsprechenden nicht gezeigten Antrieb in Verbindung steht. Dieser Drehteller 7 mit einer damit verbundenen Königswelle 8 kann durch den Betrieb um eine in Fig. 1 senkrechte Achse gedreht werden.

Auf der Königswelle 8 ist ein Kollerkopf 9 so befestigt, daß er relativ zur Königswelle 8 unverdrehbar ist (sich also nur mit derselben drehen kann), jedoch axial auf der Königswelle 8 verschiebbar und mit Hilfe von Federn 10, einer Hydraulikmutter 11 und Distanzringen 12 durch Hineinpressen oder Ablassen von Hydraulikfluid über die Leitung 13 in die Hydraulikmutter 11 in seiner Höhe einstellbar ist. Die Kollerrollen sind auf Achsen 14 so am Kollerkopf 9 befestigt, daß sie sich um diese horizontalen Achsen frei drehen können und damit bei Drehung des Kollerkopfes 9 um seine vertikale Achse auf der Matrize bzw. der Materialschicht abrollen. Sie sind noch mit Riffelungen bzw. Materialaufnahmenuten 15 versehen, um den Preßvorgang zu erleichtern.

Das gepreßte Material tritt in Strangform durch die Löcher 3 der Matrize 2 und wird durch Abbrecheinrichtungen 16, die mit dem Kollerkopf rotieren, in Abschnitte unterteilt.

Fig. 1 zeigt eine Ausführungsform der für das Verfahren der Erfindung zu verwendenden Vorrichtung, bei der oberhalb der Pelletpresse 20 eine Konditioniervorrichtung 40 angeordnet ist. Diese Konditioniervorrichtung weist ein zylindrisches Gehäuse 21 und eine Einfüllöffnung 22 auf. Im Gehäuse 21 ist ein Schneckenförderer 23 vorgesehen, der durch einen Motor 24 angetrieben werden kann.

In die Wand des Gehäuses 21 führen mehrere Leitungen 25, durch die Dampf von einer Dampfquelle 26 eingeführt werden kann. Die Dampfzufuhr durch die Leitungen 25 kann dabei durch Ventile 27 durch in der Fig. nicht gezeigte Einrichtungen gesteuert oder geregelt werden.

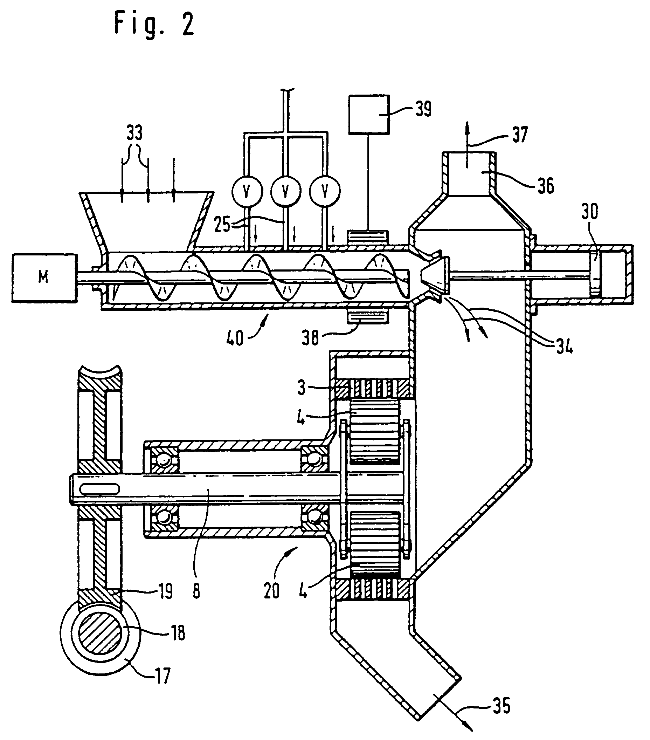

Am Ausgang weist das Gehäuse 21 eine Verengung 28 auf, die mit einem konusförmigen Ventilteller 28 ganz oder teilweise verschlossen werden kann. Der Konusteller 29 wird dabei durch einen Hydraulikkolben 30 gegen die Öffnung 28 gedrückt, um einen Gegendruck durch das Material zu erzeugen. Der Hydraulikdruck wird dabei durch eine Einrichtung 31 erzeugt, die wiederum durch eine Steuer- oder Regeleinheit 32 gesteuert wird. Diese Steuer- oder Regeleinheit 32 wirkt auch auf die Dampferzeugungseinheit 26. Im unteren Teil der Fig. 2 ist noch gezeigt, daß die Pelletpresse 20 durch einen Motor 17 angetrieben wird, der ein Schneckenzahnrad 18 antreibt, das wiederum einen fest mit der Königswelle 8 verbundenen Zahnkranz 19 antreibt.

Die Vorrichtung arbeitet wie folgt. Das zu verpressende Material wird in Richtung der Pfeile 33 in die Einfüllöffnung 22 geführt und dabei von der durch den Motor 24 angetriebenen Schnecke 23 nach rechts gegen die Öffnung 28 gedrückt. Durch die Dampfleitungen 25 wird Dampf eingeführt, um das Material zu erhitzen. Da sich in der Nähe des Ausgangs der Schnecke ein Materialpfropf bildet, ist hier der Druck höher als der Atmosphärendruck, so daß Temperaturen des Materials von über 100°C erzeugt werden können, bei denen das Material konditioniert wird.

Das so konditionierte Material fällt dann in Richtung der Pfeile 34 in die Pelletpresse 20, wird dort verpreßt und verläßt dieselbe in Richtung des Pfeils 35. Überschüssiger Dampf, der mit dem Material aus der Konditioniereinrichtung 40 austritt, kann durch eine Brüdenöffnung 36 in Richtung des Pfeils 37 die Vorrichtung verlassen.

Wie bereits erwähnt, ist eine Pelletpresse zwar in vielen Fällen zweckmäßig und vorteilhaft. In anderen Fällen kann aber auf diese Pelletpresse verzichtet werden, indem nämlich das Material, das aus der Konditioniervorrichtung 40 austritt, bereits eine granulierte Form hat, die eine direkte Verwendung als Futtermittel gestattet. Gegebenenfalls kann am Ausgang der Konditioniervorrichtung ein umlaufendes Messer oder dergleichen vorgesehen sein, mit dem der austretende Materialstrang in Einzelstücke aufgeteilt wird. Das Material, das in Richtung der Pfeile 33 in die Einfüllöffnung 22 eingefüllt wird, weist extrahierte und/oder unextrahierte Rübenschnitzel auf, denen noch ein flüssiges Nachprodukt aus der Lebensmittel- und/oder Futtermittelherstellung hinzugefügt sein kann, insbesondere Melasse, Vinasse, Schlempe und/oder Fett.

In der Ausführungsform der Fig. 2 ist die Pelletpresse 20 eine Ringmatrizenpresse, in der Kollerrollen 4 auf einer ringförmigen Matrize 3 abrollen. Bei dieser Ausführungsform ist noch eine externe Heizeinrichtung 38 gezeigt, mit der die Konditioniervorrichtung 40 von außen mit Hilfe einer Energiequelle 39 geheizt werden kann. Die Heizung kann dabei mit Hilfe von Dampf, induktiv, durch Widerstandsheizung oder andere bekannte Verfahren erfolgen. Es könnten selbstverständlich auch im Inneren der Konditioniervorrichtung 40 Heizelemente vorgesehen sein. Wenn solche Heizelemente 38 vorgesehen sind, kann unter Umständen auch auf die Dampfzuführungsleitungen 25 verzichtet werden.

## Patentansprüche

1. Verfahren zum Verarbeiten eines Ausgangsmaterials zu Futtermittel, bei dem das Ausgangsmaterial in einem Gehäuse von einem darin angeordneten Förderelement gegen das Austragsende des Gehäuses komprimiert wird, so daß sich dort bei gleichzeitiger Temperaturerhöhung ein auf das Material wirkender erhöhter Druck einstellt, und dort aus dem Gehäuse durch eine Austragsöffnung herausgedrückt wird, die durch ein Gegendruckelement in ihrem Durchlaßquerschnitt veränderbar und verschließbar ist, dadurch gekennzeichnet, daß als Ausgangsmaterial aus getrockneten oder mechanisch entwässerten Rübenschnitzeln bestehendes oder getrocknete oder mechanisch entwässerte Rübenschnitzel enthaltendes Material verwendet wird, dem vor der Behandlung im Gehäuse ein flüssiges Nachprodukt aus der Lebens- und/oder Futtermittelindustrie beigegeben wird.

2. Verfahren nach Anspruch 1, dadurch gekennzeichnet, daß die Austragsöffnung im Querschnitt einstellbar und regelbar ist.

3. Verfahren nach Anspruch 1 oder 2, dadurch gekennzeichnet, daß als Austragsöffnung ein Ringspalt verwendet wird.

4. Verfahren nach Anspruch 1 oder 2, dadurch gekennzeichnet, daß als Austragsöffnung ein Flachspalt verwendet wird.

5. Verfahren nach Anspruch 1 oder 2, dadurch gekennzeichnet, daß als Austragsöffnung ein Lochspalt verwendet wird.

6. Verfahren nach Anspruch 1 oder 2, dadurch gekennzeichnet, daß als Austragsöffnung eine Lochscheibe verwendet wird.

7. Verfahren nach einem der Ansprüche 1 bis 6, dadurch gekennzeichnet, daß als Förderelement eine Förderschnecke verwendet wird.

8. Verfahren nach einem der Ansprüche 1 bis 7, dadurch gekennzeichnet, daß das Gehäuse beheizt wird.

9. Verfahren nach einem der Ansprüche 1 bis 8, dadurch gekennzeichnet, daß das Material im Gehäuse mit Wasserdampf beaufschlagt wird.

10. Verfahren nach einem der Ansprüche 1 bis 9, dadurch gekennzeichnet, daß das Material nach Verlassen der Austragsöffnung in Abschnitte aufgeteilt wird.

11. Verfahren nach einem der Ansprüche 1 bis 10, dadurch gekennzeichnet, daß das Material nach Verlassen der Austragsöffnung pelletiert wird.

12. Verfahren nach einem der Ansprüche 1 bis 11, dadurch gekennzeichnet, daß als flüssiges Nachprodukt Melasse beigegeben wird.

13. Verfahren nach einem der Ansprüche 1 bis 12, dadurch gekennzeichnet, daß als flüssiges Nachprodukt Vinasse beigegeben wird.

14. Verfahren nach einem der Ansprüche 1 bis 13, dadurch gekennzeichnet, daß als flüssige Nachprodukte Schlempe und Molkerei-Nebenprodukte beigegeben werden.

15. Verfahren nach einem der Ansprüche 1 bis 14, dadurch gekennzeichnet, daß als flüssiges Nachprodukt Fett beigegeben wird.

16. Verfahren nach einem der Ansprüche 1 bis 15, dadurch gekennzeichnet, daß vor der Behandlung im Gehäuse dem Material Aufschlußmittel in Form von Säuren, Laugen, flüchtigen Basen beigegeben werden.

17. Verfahren nach einem der Ansprüche 1 bis 16, dadurch gekennzeichnet, daß das flüssige Nachprodukt in einer Menge beigegeben wird, die bis zu 100 Gew.-% der Trockenschnitzel entspricht.

18. Verfahren nach Anspruch 17, dadurch gekennzeichnet, daß das flüssige Nachprodukt in einer Menge beigegeben wird, die ungefähr 40-70 Gew.-% der Trockenschnitzel entspricht.

19. Verfahren nach einem der Ansprüche 1 bis 18, dadurch gekennzeichnet, daß extrahierte Rübenschnitzel verarbeitet werden.

20. Verfahren nach einem der Ansprüche 1 bis 18, dadurch gekennzeichnet, daß unextrahierte Rübenschnitzel verarbeitet werden.

## Claims

1. Method for processing a raw material to produce fodder, in which the raw material is compressed in a housing by a conveying member located therein towards the discharge end of the housing, so that with a simultaneous temperature increase at this point, an increased pressure acting on the material results and it is pushed out of the housing through a discharge opening, which can be varied in its cross-section of passage and can be closed by a counter-pressure member, characterised in that as the raw material one uses material consisting of dried or mechanically drained beetroot shavings or material containing dried or mechanically drained beetroot shavings, to which is added a liquid afterproduct from the foodstuffs and/or fodder industry, before the treatment in the housing.

2. Method according to Claim 1, characterised in that the discharge opening may have its cross-section adjusted and regulated.

3. Method according to Claim 1 or 2, characterised in that an annular gap is used as the discharge opening.

4. Method according to Claim 1 or 2, characterised in that a flat gap is used as the discharge opening.

5. Method according to Claim 1 or 2, characterised in that a perforated gap is used as the discharge opening.

6. Method according to Claim 1 or 2, characterised in that a perforated disc is used as the discharge opening.

7. Method according to one of Claims 1 to 6, characterised in that a worm conveyor is used as the conveying member.

8. Method according to one of Claims 1 to 7, characterised in that the housing is heated.

9. Method according to one of Claims 1 to 8, characterised in that the material in the housing is treated with water vapour.

10. Method according to one of Claims 1 to 9, characterised in that after leaving the discharge opening, the material is divided into sections.

11. Method according to one of Claims 1 to 10, characterised in that after leaving the discharge opening, the material is pelletised.

12. Method according to one of Claims 1 to 11, characterised in that molasses are added as the liquid afterproduct.

13. Method according to one of Claims 1 to 12, characterised in that vinasse is added as the liquid afterproduct.

14. Method according to one of Claims 1 to 13, characterised in that spent wash and dairy by-products are added as liquid afterproducts.

15. Method according to one of Claims 1 to 14, characterised in that fat is added as the liquid afterproduct.

16. Method according to one of Claims 1 to 15, characterised in that before treatment in the housing, decomposing agents in the form of acids, lyes, volatile bases are added to the material.

17. Method according to one of Claims 1 to 16, characterised in that the liquid afterproduct is added in a quantity which corresponds to up to 100% by weight of the dry shavings.

18. Method according to Claim 17, characterised in that the liquid afterproduct is added in a quantity which corresponds to approximately 40 to 70% by weight of the dry shavings.

19. Method according to one of Claims 1 to 18, characterised in that extracted beetroot shavings are processed.

20. Method according to one of Claims 1 to 18, characterised in that non-extracted beetroot shavings are processed.

## Revendications

1. Procédé de transformation d'une matière première en aliment pour animaux, dans lequel la matière première est comprimée dans un carter, vers l'extrémité de déchargement de celui-ci, par un élément transporteur qui est disposé dans le carter, de sorte qu'il s'y établisse une pression élevée qui agit sur la matière, accompagnée d'une élévation de la température, et elle est expulsée du carter par une ouverture de déchargement dont la section de passage peut être modifiée et obturée par un élément de contre-pression, caractérisé en ce que l'on utilise, comme matière première, une matière constituée par des cossettes de betterave séchées ou déshydratées mécaniquement ou contenant des cossettes séchées ou déshydratées mécaniquement, à laquelle il est ajouté, avant le traitement dans le carter, un sous-produit liquide de l'industrie alimentaire et/ou de l'industrie des aliments pour animaux.

2. Procédé selon la revendication 1, caractérisé en ce que la section transversale de l'ouverture de déchargement est variable et réglable.

3. Procédé selon la revendication 1 ou 2, caractérisé en ce qu'une fente annulaire est utilisée comme ouverture de déchargement.

4. Procédé selon la revendication 1 ou 2, caractérisé en ce qu'une fente plate est utilisée comme ouverture de déchargement.

5. Procédé selon la revendication 1 ou 2, caractérisé en ce qu'une fente à trou est utilisée comme ouverture de déchargement.

6. Procédé selon la revendication 1 ou 2, caractérisé en ce qu'un disque perforé est utilisé comme ouverture de déchargement.

7. Procédé selon l'une quelconque des revendications 1 à 6, caractérisé an ce qu'une vis transporteuse est utilisée comme élément transporteur.

8. Procédé selon l'une quelconque des revendications 1 à 7, caractérisé en ce que le carter est chauffé.

9. Procédé selon l'une quelconque des revendications 1 à 8, caractérisé en ce que de la vapeur d'eau est projetée sur la matière dans le carter.

10. Procédé selon l'une quelconque des revendications 1 à 9, caractérisé en ce qu'après avoir quitté l'ouverture de déchargement, la matière est fragmentée en morceaux.

11. Procédé selon l'une quelconque des revendications 1 à 10, caractérisé en ce qu'après avoir quitté l'ouverture de déchargement, la matière est mise en granulés.

12. Procédé selon l'une quelconque des revendications 1 à 11, caractérisé en ce que de la mélasse est ajoutée comme sous-produit liquide.

13. Procédé selon l'une quelconque des revendications 1 à 12, caractérisé en ce que de la vinasse est ajoutée comme sous-produit liquide.

14. Procédé selon l'une quelconque des revendications 1 à 13, caractérisé en ce que des drèches et des produits secondaires de laiterie sont ajoutés comme sous-produits liquides.

15. Procédé selon l'une quelconque des revendications 1 à 14, caractérisé en ce que de la graisse est ajoutée comme sous-produit liquide.

16. Procédé selon l'une quelconque des revendications 1 à 15, caractérisé en ce qu'avant le traitement dans le carter, des agents de désagrégation, sous forme d'acides, de lessives, de bases volatiles, sont ajoutés à la matière.

17. Procédé selon l'une quelconque des revendications 1 à 16, caractérisé en ce que le sous-produit liquide est ajouté dans une quantité qui peut atteindre 100% en poids des cossettes sèches.

18. Procédé selon la revendication 17, caractérisé en ce que le sous-produit liquide est ajouté dans une quantité qui correspond approximativement à 40-70% en poids des cossettes sèches.

19. Procédé selon l'une quelconque des revendications 1 à 18, caractérisé en ce que l'on transforme des cossettes de betterave épuisées.

20. Procédé selon l'une quelconque des revendications 1 à 18, caractérisé en ce que l'on transforme des cossettes de betterave non épuisées.
